# EUROPÄISCHE PATENTSCHRIFT

(11) **EP 2 818 907 B1**
(45) Veröffentlichungstag und Bekanntmachung des Hinweises auf die Patenterteilung: **17.08.2016**
(21) Anmeldenummer: 14002142.9
(22) Anmeldetag: 23.06.2014
(51) Int. Cl.: G02B 23/08, G02B 27/01, G02B 17/08

(54) **Winkelspiegel mit Bildeinkopplung**
Angle mirror with image coupling
Miroir d'angle équipé d'un couplage d'image

(30) Priorität: 24.06.2013 DE 102013106551
(43) Veröffentlichungstag der Anmeldung: 31.12.2014
(73) Patentinhaber: GuS Periscopes GmbH & Co. KG, 32312 Lübbecke (DE)
(72) Erfinder: Kuhnke, Dieter, 32312 Lübbecke (DE)
(74) Vertreter: Rolf, Gudrun, LL.M

(56) Entgegenhaltungen:
- WO-A1-2010/102597
- US-A- 5 982 536
- US-A1- 2003 129 567
- US-A1- 2011 026 090

## Beschreibung

Die Erfindung betrifft einen Winkelspiegel mit Bildeinkopplung gemäß dem Oberbegriff des ersten Patentanspruches.

Es ist eine Winkelspiegelanordnung bekannt, DE 36 27 716 A1, die auf der dem Einblick entgegengesetzten Seite eines Winkelspiegelkörpers eine Anzeigeneinheit aufweist, die durch einen Blick in den Winkelspiegel erkannt und abgelesen werden kann.

Bekannt ist auch ein Periskop mit elektronisch schaltbaren Umlenkspiegeln, US 2011/0026090 A1, welches ebenfalls eine Anzeigeeinheit aufweist, deren Bild mit dem des Ausblicks im Einblick sichtbar ist, ebenso wie ein in situ-Trainingssystem zur Anzeige von Simulationsbildern und / oder realen Bildern bekannt ist, US 2003/0129567 A1, um Simulationsbilder und reale Bilder durch eine periskopische Vorrichtung austauschbar oder gleichzeitig darstellen zu können. Des Weiteren ist ein Panorama-Anzeigesystem bekannt, US 5 982 536 A, welches mit einer Vielzahl von mit Anzeigeeinheiten versehenen Episkopen ausgestattet ist, um reale und digitale Bilder anzeigen zu können und auch ein Winkelspiegel, WO2010/102597, mit einem hinter einem Einblicksprisma angeordneten Display, zur Darstellung eines Bildes, welches unter einem zweiten Einblickswinkel in den Winkelspiegel sichtbar ist.

Nachteilig an dieser vorbekannten Winkelspiegelanordnung ist insbesondere, dass ein Betrachter von einer Durchsicht aus dem Ausblick zu einer Ansicht der Anzeigeeinheit seine Augen von unendlich auf den Nahbereich umfokussieren muss, was auf die Dauer ermüdend ist, ebenso wie die Informationen nicht gleichzeitig vom Betrachter aufgenommen werden können.

Aufgabe der Erfindung ist es einen Winkelspiegel mit einer Bildeinkopplung zur Verfügung zu stellen, der eine Umfokussierung der Augen eines Betrachters bei einem Wechsel der Bildquelle unnötig macht, sodass er gleichzeitig beide dargestellten Bildinformationen erkennen kann.

Die Lösung dieser Aufgabe ergibt sich in Verbindung mit den Oberbegriffsmerkmalen erfindungsgemäß aus den technischen Merkmalen des kennzeichnenden Teils des ersten Hauptanspruches.

Winkelspiegel weisen in der Regel einen einteiligen oder mehrteiligen Winkelspiegelkörper auf mit einem Einblick, einem Ausblick und jeweils davor angeordneten Scheiben mit Scheibenheizungen und/ oder optischen Filtern. Weiterhin besitzen sie obere und untere Umlenkspiegel, wobei ein elektronisches Display bekanntermaßen so hinter dem Einblick angeordnet ist, dass es unmittelbar oder durch einen halbdurchlässig ausgebildeten unteren Umlenkspiegel sichtbar ist.

Dadurch, dass das Display in einer vertikalen Richtung am Winkelspiegel angeordnet ist und der untere Umlenkspiegel ebenfalls als Strahlteiler ausgebildet ist, lässt sich über eine Anordnung verschiedener Spiegelelemente und einer Einkopplungslinse zwischen dem Display und dem Winkelspiegelkörper ein Strahlengang verwirklichen, der mit dem Strahlengang durch den Ausblick so überlagert werden kann, dass beide Bildinformationen bei gleicher Fokussierung des Auges eines Betrachters in identischer Entfernung zum Einblick aufgenommen werden können, da das Bild des Displays als im Unendlichen liegend erzeugt wird, so dass ohne Akkumulation des Auges des Betrachters dessen Augenlinsen weiter auf eine weite Entfernung gerichtet fokussiert bleiben können, ebenso wie dies bei der üblichen Durchsicht durch den Winkelspiegel der Fall ist.

Dem ersten konkaven Spiegelelement ist gegenüber dem Einblick, direkt über diesem ein zweites konvexes Spiegelelement und diesem über dem ersten Spiegelelement ein drittes konkaves Spiegelelement und diesem über dem zweiten Spiegelelement die als Kollektorlinse ausgebildete Einkopplungslinse jeweils gegenüberliegend versetzt übereinander angeordnet, ohne zumindest zwischen den Scheiben des Einblickes des zweiten Spiegelelementes und der Einkopplungslinse wesentliche Freiräume aufrechtzuerhalten, so dass auch diese Anordnung höchst kompakt und platzsparend ausgeführt ist.

Vorteilhafte Ausgestaltungen des Gegenstandes der Erfindung ergeben sich mit und in Kombination aus den nachfolgenden Unteransprüchen.

Entsprechend einer besonders bevorzugten Ausführungsform der Erfindung ist das Display auf der Seite des Einblickes nah am Winkelspiegel platziert, unmittelbar vor der am Winkeispiegelkörper angeordneten Einkopplungslinse, so dass nur ein geringer zusätzlicher Bauraum für das Display und die Linse erforderlich ist.

Das zweite Spiegelelement und das dritte Spiegelelement sind ebenso wie die Einkopplungslinse auf der vorderen und hinteren Seitenfläche des Winkelspiegelkörpers aufgebracht, wobei dies bevorzugt über einen durchsichtigen Verbindungskleber luftspaltfrei erfolgt, so dass unerwünschte Brechungserscheinungen ausgeschlossen werden können.

Hierzu weisen der Winkelspiegelkörper, die Einkopplungslinse, die Spiegelelemente und auch der durchsichtige Verbindungskleber vorteilhafterweise jeweils einen identischen Brechungsindex auf.

Gemäß einer bevorzugten Ausführungsform der Erfindung ist nur das erste Spiegelelement mit einer leichten Kippung gegen die optische Achse ausgestattet und das zweite und dritte Spiegelelement sowie die Einkopplungslinse kippwinkelfrei gegen die optische Achse ausgebildet, wodurch sich eine erhebliche Reduzierung des Fertigungsaufwandes der optischen Teile erzielen lässt.

Diese besteht auch darin, dass die hintere Seitenfläche des Winkelspiegelkörpers als vertikale Planfläche zur gemeinsamen Anordnung der Scheiben des Einblickes, des zweiten Spiegelelementes und der Einkopplungslinse einteilig ausgeführt werden kann.

Bevorzugterweise ist auch die vordere Seitenfläche des Winkelspiegelkörpers mit einer vertikalen Planfläche zur Anordnung des dritten Spiegelelementes ausgestattet, wobei diese vertikale Planfläche parallel zur hinteren Seitenfläche auf der Seite des Einblickes ausgebildet ist.

Nachfolgend ist ein Ausführungsbeispiel der Erfindung anhand von Zeichnungen näher beschrieben. Es zeigen:

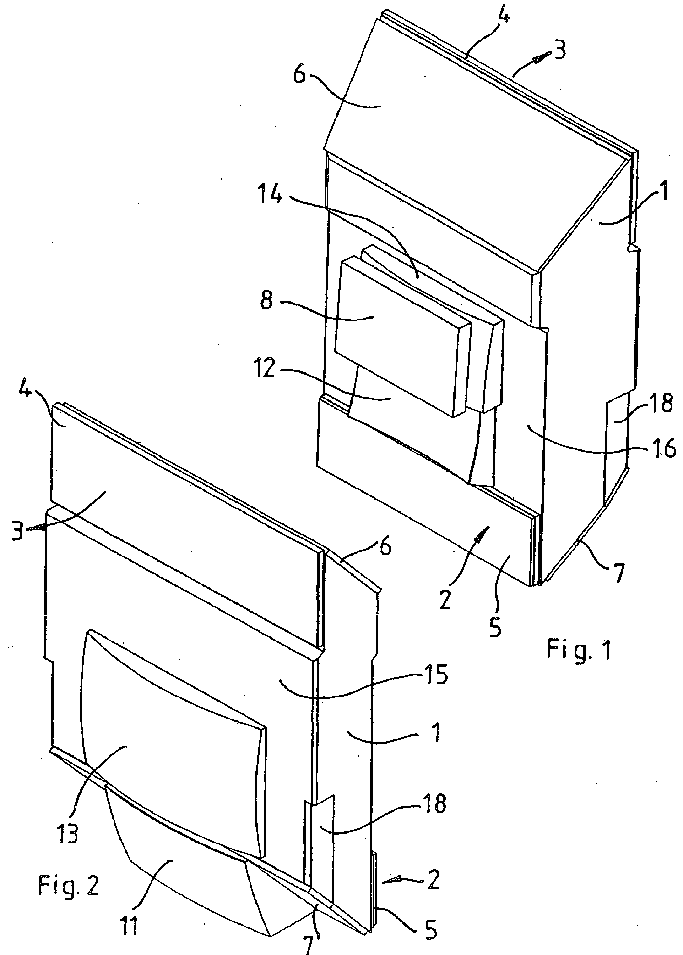

- Fig. 1: eine räumliche Ansicht des Winkelspiegels von der Einblickseite,
- Fig. 2: eine räumliche Ansicht des Winkelspiegels gemäß Fig. 1 von der Ausblickseite, und

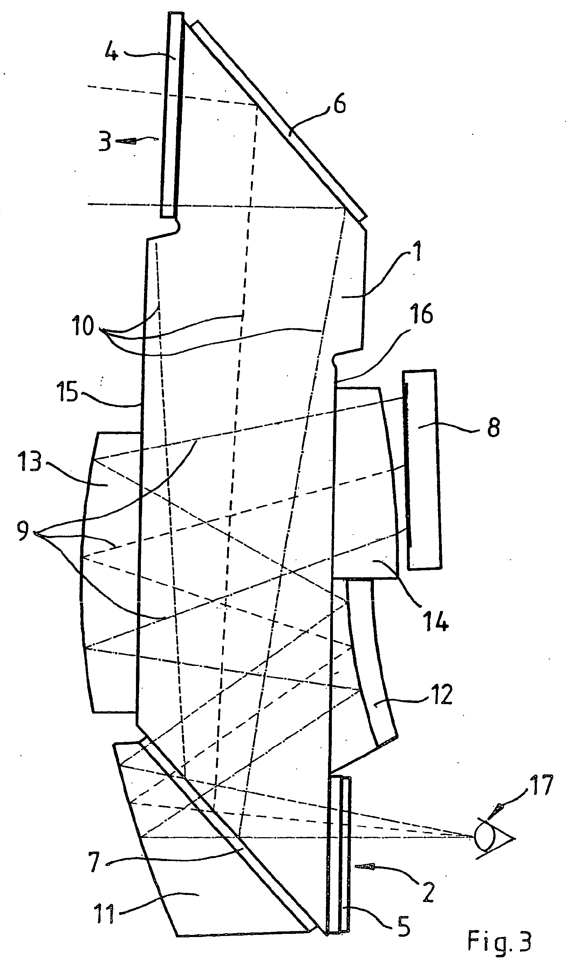

- Fig. 3: eine Seitenansicht des Winkelspiegels gemäß der Fig. 1, 2 mit eingetragenem Strahlengang.

Der Winkelspiegel besteht aus einem Winkelspiegelkörper 1 mit einem unteren Einblick 2 und einem oberen Ausblick 3, wobei vor beiden Scheiben 4;5 angeordnet sind, die mit Scheibenheizungen und/ oder Filtern ausgestattet sein können.

Die Schrägen hinter dem Einblick 2 und dem Ausblick 3 sind mit einem oberen Umlenkspiegel 6 und einem unteren Umlenkspiegel ausgestattet, welcher als Strahlteiler 7 ausgebildet ist.

Ein herkömmlicher Strahlengang 10 tritt durch den Ausblick 3 ein, wird am oberen Umlenkspiegel 6 nach unten umgelenkt und vom unteren Strahlteiler 7 durch den Einblick 2 an einer Augenposition 17 fokussiert.

Ein vertikales Display 8 koppelt über eine als Kollektorlinse ausgebildete Einkopplungslinse 14 das Bild mit annährend parallelem Strahlengang 9 in den der Winkelspiegelkörper 1 ein, wobei schräg versetzt nach unten auf der entgegengesetzten Seite des Winkelspiegelkörpers 1 ein drittes Spiegelelement 13 angeordnet ist, welches leicht konkav ausgeführt ist und den Strahlengang 9 zu einem unmittelbar unterhalb der Einkopplungslinse 14 angeordneten zweiten Spiegelelement 12 reflektiert, welches seinerseits leicht konvex ausgebildet ist und die Strahlen schräg nach unten auf ein hinter dem Strahlteiler 7 angeordneten ersten Spiegelelement 11 reflektiert, welches ebenfalls leicht konkav ausgebildet ist und die Strahlen so reflektiert, dass er nach Durchgang durch den Strahlteiler 7 mit dem Strahlengang 10 deckungsgleich ist und ebenfalls an der Augenposition 17 fokussiert ist.

Dieses ermöglicht einem Betrachter beide Darstellungen gleichzeitig zu betrachten, ohne seine Augen umfokussieren zu müssen, wenn er vom Bild des Ausblicks 3 auf die Darstellung des Displays 8 als Informationsquelle wechseln möchte.

Die seitlichen, dem Einblick 2 entgegengesetzten, etwa vertikalen unteren Ecken des Winkelspiegelkörpers 1 seitlich des dritten Spiegelelements 13 sind mit Abschrägungen 18 versehen, um unerwünschte Reflexionen zu vermeiden.

## Patentansprüche

1. Winkelspiegel mit Bildeinkopplung mit einem Winkelspiegelkörper (1), mit einem Einblick (2), einem Ausblick (3), davor angeordneten Scheiben (4;5), sowie mit oberen und unteren Umlenkspiegeln (6) und einem Display (8), dessen erzeugtes Bild im Einblick (2) sichtbar ist, wobei das Display (8) in einer vertikalen Richtung am Winkelspiegel angeordnet ist, der untere Umlenkspiegel (6) als Strahlteiler (7) ausgebildet ist und dahinter ein erstes Spiegelelement (11) angeordnet ist und dass der Strahlengang (9) des Displays (8) über eine am Winkelspiegelkörper (1) angeordnete Einkopplungslinse (14) und ebenso daran angeordnete Spiegelelemente (11;12;13) so geführt ist, dass er am Strahlteiler (7) mit dem Strahlengang (10) durch den Ausblick (3) überlagert ist und beide Bildinformationen bei gleicher Fokussierung des Auges eines Betrachters in identischer Entfernung zum Einblick (2) dargestellt sind, **dadurch gekennzeichnet, dass** dem ersten, konkaven Spiegelelement (11) über dem Einblick (2) ein zweites, konvexes Spiegelelement (12) und diesem über dem Spiegelelement 1 (11) ein drittes, konkaves Spiegelelement (13) und diesem über dem zweiten Spiegelelement (12) die als Kollektorlinse ausgebildete Einkopplungslinse (14) jeweils gegenüberliegend versetzt übereinander angeordnet sind.

2. Winkelspiegel nach Anspruch 1, **dadurch gekennzeichnet, dass** das Display (8) auf der Seite des Einblickes (2) am Winkelspiegel angeordnet ist.

3. Winkelspiegel nach einem der vorgenannten Ansprüche, **dadurch gekennzeichnet, dass** das zweite Spiegelelement (12) und das dritte Spiegelelement (13) und die Einkopplungslinse (14) auf den vorderen und hinteren Seitenflächen (15;16) des Winkelspiegelkörpers (1) aufgebracht sind.

4. Winkelspiegel nach einem der vorgenannten Ansprüche, **dadurch gekennzeichnet, dass** der Winkelspiegelkörper (1), die Einkopplungslinse (14), die Spiegelelemente (11;12;13) und ein durchsichtiger Verbindungskleber jeweils einen identischen Brechungsindex aufweisen.

5. Winkelspiegel nach einem der vorgenannten Ansprüche, **dadurch gekennzeichnet, dass** das erste Spiegelelement (11) eine leichte Kippung gegen die optische Achse aufweist.

6. Winkelspiegel nach einem der vorgenannten Ansprüche, **dadurch gekennzeichnet, dass** das zweite Spiegelelement (12), das dritte Spiegelelement (13) sowie die Einkopplungslinse (14) kippwinkelfrei gegen die optische Achse ausgebildet sind.

7. Winkelspiegel nach einem der vorgenannten Ansprüche, **dadurch gekennzeichnet, dass** seine hintere Seitenfläche (16) eine gemeinsame vertikale Planfläche zur Anordnung der Scheiben (5) des Einblicks (2), des zweiten Spiegelelementes (12) und der Einkopplungslinse (14) aufweist.

8. Winkelspiegel nach einem der vorgenannten Ansprüche, **dadurch gekennzeichnet, dass** er auf der vorderen Seitenfläche (15) eine vertikale Planfläche zur Anordnung des dritten Spiegelelementes (13) aufweist, die parallel zur hinteren Seitenfläche (16) auf der Seite des Einblicks (2) ausgebildet ist.

## Claims

1. Angle mirror with image injection having an angle-mirror body (1), having a viewing-in end (2), a viewing-out end (3), and panels (4; 5) arranged in front of said ends, and having upper and lower deflection mirrors (6) and a display (8), the generated image of which is visible in the viewing-in end (2), wherein the display (8) is arranged in a vertical direction on the angle mirror, the lower deflection mirror (6) is configured as a beam splitter (7) and a first mirror element (11) is arranged behind it, and in that the beam path (9) of the display (8) is guided via an injection lens (14) arranged on the angle-mirror body (1) and likewise via mirror elements (11; 12; 13) arranged thereon such that it is superposed at the beam splitter (7) by the beam path (10) through the viewing-out end (3) and both image information items are represented with the same focusing of the eye of an observer at identical distance from the viewing-in end (2), **characterized in that** arranged, in a manner such that they are arranged above one another with offset, opposite the first, concave mirror element (11) above the viewing-in end (2) is a second, convex mirror element (12), opposite which is, above the mirror element 1 (11), a third, concave mirror element (13) and, opposite said third mirror element, above the second mirror element (12), is the injection lens (14) which is configured as a collector lens.

2. Angle mirror according to Claim 1, **characterized in that** the display (8) is arranged on the side of the viewing-in end (2) on the angle mirror.

3. Angle mirror according to one of the preceding claims, **characterized in that** the second mirror element (12) and the third mirror element (13) and the injection lens (14) are mounted on the front and rear side surfaces (15; 16) of the angle-mirror body (1).

4. Angle mirror according to one of the preceding claims, **characterized in that** the angle-mirror body (1), the injection lens (14), the mirror elements (11; 12; 13) and a transparent bonding adhesive have in each case an identical refractive index.

5. Angle mirror according to one of the preceding claims, **characterized in that** the first mirror element (11) is slightly tilted with respect to the optical axis.

6. Angle mirror according to one of the preceding claims, **characterized in that** the second mirror element (12), the third mirror element (13) and the injection lens (14) are configured without tilt angle with respect to the optical axis.

7. Angle mirror according to one of the preceding claims, **characterized in that** its rear side surface (16) has a common vertical planar surface for arrangement of the panels (5) of the viewing-in end (2), of the second mirror element (12) and of the injection lens (14).

8. Angle mirror according to one of the preceding claims, **characterized in that** it has on the front side surface (15) a vertical planar surface for arrangement of the third mirror element (13) which is configured to be parallel to the rear side surface (16) on the side of the viewing-in end (2).

## Revendications

1. Rétroviseur angulaire avec couplage d'entrée d'image, comprenant un corps de rétroviseur angulaire (1), comprenant une entrée d'observation (2), une sortie d'observation (3), des vitres (4 ; 5) disposées devant celles-ci, ainsi que des miroirs de renvoi (6) supérieur et inférieur et un afficheur (8) dont l'image générée est visible dans l'entrée d'observation (2), l'afficheur (8) étant disposé dans une direction verticale sur le rétroviseur angulaire, le miroir de renvoi inférieur (6) étant réalisé sous la forme d'un séparateur de faisceaux (7) et un premier élément à miroir (11) étant disposé derrière celui-ci, et en ce que le trajet du faisceau (9) de l'afficheur (8) est guidé par le biais d'une lentille de couplage d'entrée (14) disposée sur le corps de rétroviseur angulaire (1), et aussi par des éléments à miroir (11 ; 12 ; 13) montés sur celui-ci, de telle sorte qu'au niveau du séparateur de faisceaux (7), il est superposé au trajet du faisceau (10) à travers la sortie d'observation (3) et les deux informations d'image sont représentées avec la même mise au point de l'oeil d'un observateur à une distance identique de l'entrée d'observation (2), **caractérisé en ce qu'**un deuxième élément à miroir (12) convexe est disposé de manière mutuellement décalée par rapport au premier élément à miroir (11) concave au-dessus de l'entrée d'observation (2), et un troisième élément à miroir (13) concave est disposé de manière mutuellement décalée par rapport audit deuxième élément à miroir (12) au-dessus de l'élément à miroir 1 (11) et la lentille de couplage d'entrée (14) réalisée sous la forme d'une lentille collectrice est disposée de manière mutuellement décalée par rapport audit troisième élément à miroir (13) au-dessus du deuxième élément à miroir (12), tous ces éléments étant disposés les uns au-dessus des autres.

2. Rétroviseur angulaire selon la revendication 1, **caractérisé en ce que** l'afficheur (8) est disposé sur le rétroviseur angulaire du côté de l'entrée d'observation (2).

3. Rétroviseur angulaire selon l'une des revendications précédentes, **caractérisé en ce que** le deuxième élément à miroir (12) et le troisième élément à miroir (13) et la lentille de couplage d'entrée (14) sont montés sur les surfaces latérales (15 ; 16) avant et arrière du corps de rétroviseur angulaire (1).

4. Rétroviseur angulaire selon l'une des revendications précédentes, **caractérisé en ce que** le corps de rétroviseur angulaire (1), la lentille de couplage d'entrée (14), les éléments à miroir (11 ; 12 ; 13) et un adhésif de liaison transparent présentent respectivement un indice de réfraction identique.

5. Rétroviseur angulaire selon l'une des revendications précédentes, **caractérisé en ce que** le premier élément à miroir (11) présente une légère inclinaison par rapport à l'axe optique.

6. Rétroviseur angulaire selon l'une des revendications précédentes, **caractérisé en ce que** le deuxième élément à miroir (12), le troisième élément à miroir (13) ainsi que la lentille de couplage d'entrée (14) sont réalisés sans inclinaison par rapport à l'axe optique.

7. Rétroviseur angulaire selon l'une des revendications précédentes, **caractérisé en ce que** sa surface latérale arrière (16) possède une surface plane verticale commune destinée à y monter les vitres (5) de l'entrée d'observation (2) du deuxième élément à miroir (12) ainsi que la lentille de couplage d'entrée (14).

8. Rétroviseur angulaire selon l'une des revendications précédentes, **caractérisé en ce qu'**il possède sur sa surface latérale avant (15) une surface plane verticale destinée à y monter le troisième élément à miroir (13), laquelle est réalisée parallèlement à la surface latérale arrière (16) du côté de l'entrée d'observation (2).
